# EUROPÄISCHE PATENTSCHRIFT

(11) **EP 1 984 677 B1**
(45) Veröffentlichungstag und Bekanntmachung des Hinweises auf die Patenterteilung: **07.12.2016**
(21) Anmeldenummer: 06829466.9
(22) Anmeldetag: 09.12.2006
(51) Int. Cl.: F24F 5/00, F24F 12/00

(54) **ANLAGE ZUM ERWÄRMEN EINER HALLE WIE EINER SCHWIMMHALLE**
SYSTEM FOR HEATING AN AREA SUCH AS AN INDOOR SWIMMING POOL
INSTALLATION POUR CHAUFFER UNE SALLE, PAR EXEMPLE UNE SALLE COMPORTANT UNE PISCINE

(30) Priorität: 17.02.2006 DE 102006007845
(43) Veröffentlichungstag der Anmeldung: 29.10.2008
(73) Patentinhaber: Menerga GmbH, 45473 Mülheim an der Ruhr (DE)
(72) Erfinder: DOERK, Horst, 45219 Essen (DE)
(74) Vertreter: Cohausz, Helge B.
(86) Internationale Anmeldenummer: PCT/EP2006/011874
(87) Internationale Veröffentlichungsnummer: WO 2007/095985

(56) Entgegenhaltungen:
- EP-A2- 0 785 399
- WO-A-00/34719
- DE-A1- 3 703 754
- DE-A1- 4 243 429
- FR-A1- 2 742 216
- GB-A- 1 551 647

## Beschreibung

Die Erfindung betrifft eine Anlage zum Erwärmen eines Gebäudes wie einer Halle insbesondere einer Schwimmhalle, wobei das Gebäude durch Zuluft erwärmt wird, die zuvor durch den Kondensator einer Wärmepumpe der Anlage strömt, und wobei zum Vorerwärmen der Zuluft vor dem Kondensator der Wärmepumpe ein Wärmetauscher angeordnet ist, der von der Abluft durchströmt ist.

Es ist bei Anlagen zum Erwärmen der Zuluft einer Halle insbesondere einer Schwimmhalle bekannt, mit einem Wärmetauscher die Wärmeenergie der Abluft auf die Zuluft abzugeben und hierbei zusätzlich eine Wärmepumpe anzuordnen, deren Kondensator die Außenluft hinter dem Wärmetauscher erwärmt. Bei solchen Anlagen hat es sich gezeigt, dass ein Vorheizen der angesaugten Außenluft gleich beim Eintritt der Außenluft und damit vor dem Filter und den Klappen erforderlich ist, um ein Vereisen der Klappen und Filter zu verhindern. Hierzu ist es bei diesen Anlagen bekannt, einen Wärmetauscher am Außenlufteingang anzuordnen, der in einem Flüssigkeitskreislauf liegt, in dem ein zweiter Wärmetauscher als Luftkühler angeordnet ist, der von der Fortluft vor dem Gegenstromwärmetauscher durchströmt ist. Ein solcher zusätzlicher Flüssigkeitskreislauf ist aufwendig und führt zudem zu einer Abkühlung der Abluft vor dem Wärmetauscher und damit zu einem Wirkungsgradverlust bei der Vorerwärmung der Außenluft.

Aus der GB 1 551 647 ist ein Enthalpie-Wärmerückgewinnungssystems bekannt zur Erwärmung und Auffeuchtung des Außen-/Zuluftstromes unter Nutzung der Abluftwärme und -feuchte. Ziel dieser Lösung ist die Vermeidung einer Kondensation der Abluftfeuchte im Enthalpie-Wärmerückgewinnungssystem und der daraus resultierenden Probleme wie dem Auswaschen des Sorptionsmittels mit dem Kondensat. Dies führt zu einer Reduktion des abluftseitigen Wärmerückgewinnungspotentiales durch die gewählte Position des Verdampfers in der Abluft vor dem Wärmerückgewinnungssystem.

Aufgabe der Erfindung ist es, eine Anlage der eingangs genannten Art so zu verbessern, dass bei geringem technischen Aufwand und hohem Wirkungsgrad der Anlage eine ausreichende Erwärmung der Außenluft bei tiefen Außentemperaturen erreicht wird.

Diese Aufgabe wird erfindungsgemäß durch die kennzeichnenden Merkmale von Anspruch 1 gelöst.

Eine solche Konstruktion benötigt keinen zusätzlichen Flüssigkeitskreislauf und keinen zusätzlichen Wärmetauscher in der Abluft vor dem Gegenstromwärmetauscher. Damit ist auch kein unnötiger Wirkungsgradverlust gegeben, den ein zusätzlicher Flüssigkeitskreislauf stets erbringt. Nur die Restwärme hinter der Hauptwärmeübertragung wird genutzt. Eine solche Anordnung hat zudem den Vorteil, dass eine stärkere Durchfeuchtung der Filter am Außenlufteingang und damit deren Keimwachstum sicher verhindert wird, und dass ein Einfrieren des Kondensats verhindert wird.

Vorteilhafte Ausgestaltungen der Erfindungen sind in den Unteransprüchen aufgeführt.

Ausführungsbeispiele der Erfindung sind in den Zeichnungen schematisch dargestellt und werdeb im Folgenden näher beschrieben. Es zeigen:

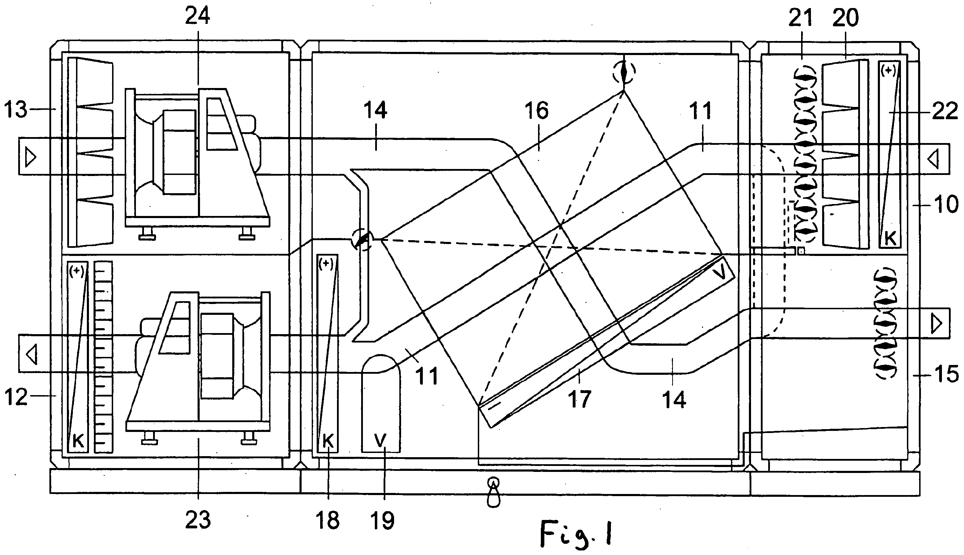

- Figur 1: eine erste Ausführungsform;

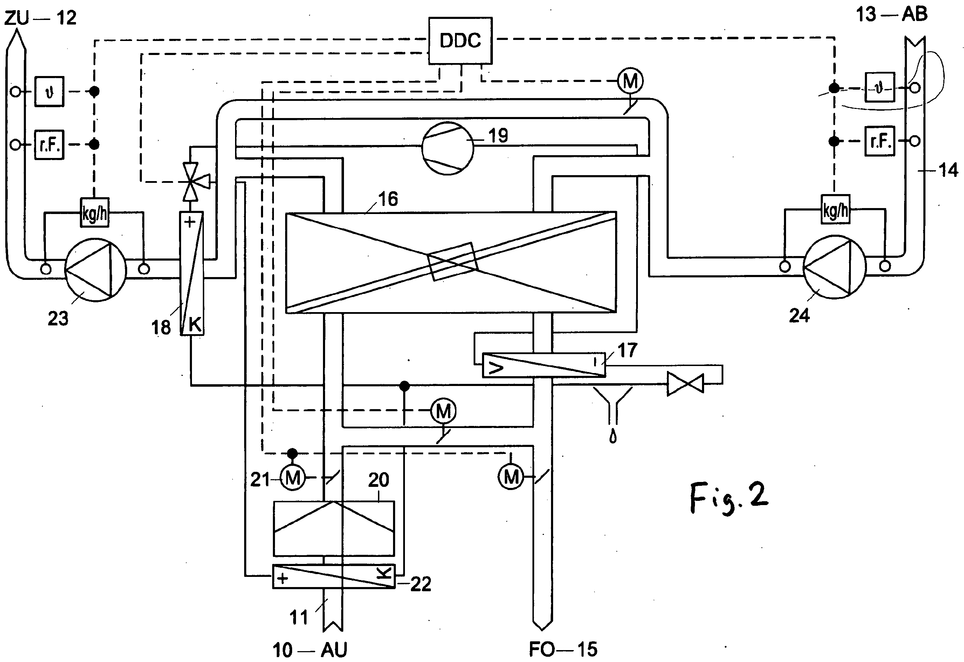

- Figur 2: eine zweite etwas geänderte Ausfhrungsform.

Die Anlage zum Erwärmen und insbesondere auch zum Entfeuchten der Innenluft einer Halle insbesondere einer Schwimmhalle besitzt eine Außenluftzufuhröffnung 10, über die die Außenluft in einen Kanal 11 tritt, der die Außenluft durch die Anlage führt, wonach sie über eine Zuluftöffnung 12 in die Halle erwärmt austritt. Ferner besitzt die Anlage eine Abluftöffnung 13, die die Abluft über einen Kanal 14 zur Fortluftauslassöffnung 15 führt. Die beiden Kanäle 11, 14 kreuzen sich in einem Wärmetauscher 16, in dem die Abluft ihre Wärmeenergie der Zuluft überträgt. Nahe der Zuluftöffnung 12 ist im Kanal 11 ein Gebläse oder Ventilator 23 und nahe der Abluftöffnung 13 im Kanal 14 ein Gebläse oder Ventilator 24 angeordnet, die für die Luftströmungen sorgen.

Hinter dem Wärmetauscher 16 durchströmt die Abluft einen Verdampfer 17 eines Wärmepumpenkreislaufs, dessen Kondensator 18 im Zuluftkanal 11 hinter dem Wärmetauscher 16 angeordnet ist, so dass die vom Verdichter 19 der Wärmepumpe vom Verdampfer aufgenommene Wärmeenergie dem Kondensator 18 und damit der Zuluft übertragen wird. Hierbei ist der Verdichter 19 leistungsgeregelt, um die Heiz- und/oder die Entfeuchtungsleistung der Anlage zu regeln.

Gleich hinter der Außenluftzufuhröffnung 10 liegen im Kanal 11 mindestens ein Filter 20 und Klappen 21. Ferner ist zwischen dem oder den Filter(n) 20 und der Öffnung 10 ein zweiter Kondensator 22 angeordnet, der im selben, oben erwähnten Wärmepumpenkreislauf angeordnet ist, so dass die Wärmepumpe bzw. der Wärmepumpenkreislauf zwei Kondensatoren 18, 22 aufweist. Hierbei ist der zweite Kondensator 22 gegenüber dem ersten Kondensator 18 im Wärmepumpenkreislauf nachrangig durchströmt, wobei er die Aufgabe hat, die durch die Außenluftöffnung 10 einströmende kalte Luft vorzuerwärmen, so dass ein sicherer Schutz gegen Vereisung der Filter und der Klappen gegeben ist.

Diese Vorerwärmung hat zudem den Vorteil, dass bei hohen Außenluftfeuchten durch die Vorerwärmung dafür gesorgt ist, dass der oder die Außenluftfilter 20 keiner Durchfeuchtung ausgesetzt sind, die zu einem Keimwachstum führen würde.

## Patentansprüche

1. Anlage zum Erwärmen eines Gebäudes wie einer Halle insbesondere einer Schwimmhalle, wobei das Gebäude durch Zuluft erwärmt wird, die zuvor durch den Kondensator (18) einer Wärmepumpe (17, 18, 19) der Anlage strömt, und wobei zum Vorerwärmen der Zuluft vor dem Kondensator (18) der Wärmepumpe ein Wärmetauscher (16) angeordnet ist, der von der Abluft durchströmt ist, wobei die Außenluft vor Erreichen des Wärmetauschers (16) einen zweiten Kondensator (22) durchströmt, der im Kreislauf derselben Wärmepumpe (17, 18, 19) angeordnet ist, **dadurch gekennzeichnet dass** im Fortluftkanal der Anlage der Verdampfer (17) der Wärmepumpe hinter dem Wärmetauscher (16) angeordnet ist, um durch diese der Fortluft entzogene Wärme die Temperatur der Zuluft durch die Kondensatoren (18, 22) der Wärmepumpe zu erhöhen.

2. Anlage nach Anspruch 1, **dadurch gekennzeichnet, dass** der zweite Kondensator (22) vor den Klappen (21) und/oder dem Luftfilter (20) des Außenlufteingangs (10) angeordnet ist.

3. Anlage nach einem der vorherigen Ansprüche, **dadurch gekennzeichnet, dass** der Wärmepumpenkreislauf einen Verdichter (19), zwei Kondensatoren (18, 22) und einen Verdampfer (17) aufweist.

4. Anlage nach einem der vorherigen Ansprüche, **dadurch gekennzeichnet, dass** der Verdichter (19) der Wärmepumpe leistungsgeregelt ist, um die Heiz- und/oder die Entfeuchtungsleistung zu regeln.

## Claims

1. System for heating a building such as an indoor space, in particular an indoor swimming pool, wherein the building is heated using inflow air which, beforehand, flows through the condenser (18) of a heat pump (17, 18, 19) of the system, and wherein a heat exchanger (16), through which the outflow air flows, is arranged upstream of the condenser (18) of the heat pump for pre-heating the inflow air, wherein the outside air flows through a second condenser (22), arranged in the circuit of the same heat pump (17, 18, 19), before reaching the heat exchanger (16), **characterized in that** the evaporator (17) of the heat pump is arranged downstream of the heat exchanger (16) in the outflow air duct of the system, in order to use this heat extracted from the outflow air to raise the temperature of the inflow air using the condensers (18, 22) of the heat pump.

2. System according to Claim 1, **characterized in that** the second condenser (22) is arranged upstream of the flaps (21) and/or the air filter (20) of the outside air inlet (10).

3. System according to either of the preceding claims, **characterized in that** the heat pump circuit has a compressor (19), two condensers (18, 22) and an evaporator (17).

4. System according to one of the preceding claims, **characterized in that** the compressor (19) of the heat pump is regulated in terms of power in order to regulate the heating power and/or the dehumidification power.

## Revendications

1. Installation de chauffage d'un bâtiment tel qu'une salle, en particulier une piscine, le bâtiment étant chauffé par de l'air amené qui s'écoule au préalable à travers le condenseur (18) d'une pompe à chaleur (17, 18, 19) de l'installation, un échangeur de chaleur (16) étant disposé avant le condenseur (18) de la pompe à chaleur pour le préchauffage de l'air amené, lequel échangeur de chaleur est parcouru par l'air d'évacuation, l'air de sortie traversant un deuxième condenseur (22) avant d'atteindre l'échangeur de chaleur (16), lequel condenseur est disposé dans le circuit de la même pompe à chaleur (17, 18, 19), **caractérisée en ce que** dans le conduit d'air vicié de l'installation, l'évaporateur (17) de la pompe à chaleur est disposé derrière l'échangeur de chaleur (16), afin d'augmenter par cette température prélevée à l'air vicié la température de l'air amené traversant les condenseurs (18, 22) de la pompe à chaleur.

2. Installation selon la revendication 1, **caractérisée en ce que** le deuxième condenseur (22) est disposé avant le volet (21) et/ou le filtre à air (20) de l'entrée d'air extérieur (10).

3. Installation selon l'une quelconque des revendications précédentes, **caractérisée en ce que** le circuit de pompe à chaleur présente un compresseur (19), deux condenseurs (18, 22) et un évaporateur (17).

4. Installation selon l'une quelconque des revendications précédentes, **caractérisée en ce que** le compresseur (19) de la pompe à chaleur est régulé en puissance, afin de réguler la puissance de chauffage et/ou de déshumidification.
